# EUROPEAN PATENT SPECIFICATION

(11) **EP 2 742 801 B1**
(45) Date of publication and mention of the grant of the patent: **22.01.2020**
(21) Application number: 13195956.1
(22) Date of filing: 05.12.2013
(51) Int. Cl.: A01N 25/00, A01N 59/02, A01P 11/00

(54) **SUBSTANTIALLY ATOXIC RODENTICIDAL FORMULATIONS IN THE FORM OF FRESH PASTE, PELLET OR PARAFFIN BLOCK, ACTIVE BY MEANS OF INTESTINAL OCCLUSION**
SUBSTANZIELL ATOXISCHE RODENTIZIDFORMULIERUNGEN IN FORM VON FRISCHER PASTE, PELLET ODER PARAFFINBLOCK MIT AKTIVITÄT MITTELS DARMOKKLUSION
FORMULATIONS RODENTICIDES SENSIBLEMENT ATOXIQUES SOUS FORME DE PÂTE FRAÎCHE, DE PASTILLES OU BLOC DE PARAFFINE, ACTIVES AU MOYEN DE L'OCCLUSION INTESTINALE

(30) Priority: 12.12.2012 IT MI20122121
(43) Date of publication of application: 18.06.2014
(73) Proprietor: Dr. Tezza S.r.l., 37050 Angiari (Verona) (IT)
(72) Inventor: Tezza, Pierluigi, 37020 Cerro Veronese (Verona) (IT)
(74) Representative: Petruzziello, Aldo

(56) References cited:
- EP-A1- 2 497 362
- EP-A2- 0 372 796
- WO-A2-2004/062362
- CN-A- 101 032 243
- CN-A- 101 112 198

## Description

The present invention relates to substantially atoxic rodenticidal baits with high efficacy and improved palatability.

More particularly the present invention relates to baits, as defined above, in the form of fresh paste, pellets or paraffin block, preferably fresh paste, which perform their action by causing an intestinal occlusion, without a substantial use of known toxic active ingredients, for example those of the anticoagulant type. These formulations are moreover particularly useful as monitoring baits to be used in association with poisonous rodenticidal baits or conventional traps.

In order to reduce the number of rodents present in a certain environment use is made of rodenticidal formulations, with greater or lesser palatability, available in the form of fresh paste, pellets, paraffin blocks and the like.

The agents with rodenticidal action contained in most of the palatable formulations act generally through poisoning of the rodent in 24-48 hours in that they are poisonous or highly toxic substances: very widespread are formulations which use anticoagulant agents belonging to the family of the hydroxycoumarins such as warfarin, bromadiolone, brodifacoum and difenacoum or to the family of the indandiones such as chlorophacinone and diphacinone.

These anticoagulant active ingredients are dissolved in an appropriate solvent which serves as a vehicle for them in the formulation and to make them less dangerous to humans.

However these anticoagulant active ingredients, which are liposoluble, tend to degrade in the presence of water (acid hydrolysis) and in an environment with slightly acid pH: this entails a decrease in efficacy in these conditions, above all if prolonged in time, entailing the use of a greater quantity of active ingredient compared to what is necessary in order to compensate the possible loss due to poor stability.

Therefore these compositions are disadvantageous also for economic reasons, as well as eco-toxicological ones.

EP372796 describes pellets/blocks containing a rodenticidal active ingredient, also of the anticoagulant type, and 10-40% of paraffin waxes, in addition to flours, acting in order to harden the final composition and common palatable substances in the rodenticidal baits.

These pellets/blocks are resistant to humidity but no indication is given as to the chemical resistance of the rodenticidal active ingredient in particular conditions, for example with acid pH. As mentioned above, the active ingredients of the family of the anticoagulants are instable with acid pH therefore resulting in a lower or almost zero rodenticidal efficacy in these conditions.

Moreover the even mixing of the components forming said pellets/blocks requires fairly long periods of time, for example of the order of 4/8 hours, in that it takes place in conventional rotating mixers, notoriously with slow stirring.

In the sector of effective compositions for deratization it is therefore desirable to have available palatable and stable formulations, substantially without poisonous substances, or containing negligible quantities of said poisonous substances (deratizing active ingredients), such as to result in rodenticidal baits substantially not dangerous for humans from the toxicological viewpoint yet effective in deratization, even after long periods of storage (high shelf-life), in conditions of acid pH and/or presence of water and which can be produced in a short time.

Compositions for baits are also known in the art which act by means of intestinal occlusion, such as for example those described in the patent application CN101032243, which contain cement, bentonite and a generic palatable material, without therefore any rodenticidal active ingredient. These formulations, however, are very hygroscopic given the high total quantity (20-50%) of hydrohardening and hydroabsorbent material, resulting poorly suitable for being used in particularly humid environments, such as for example drains, manholes and sewers.

WO2004/062362 describes a solid rodenticidal composition in the form of pellets and without active ingredient, formed by 30-50% of calcium sulfate hemihydrate and by 40-60% of common palatable substances in the rodenticidal baits such as flours and sugars, where the pellet is covered by a protective coating of hydrophobic substances.

The high quantity of calcium sulfate hemihydrate provided and the nature of the same entails however the disadvantage of making the formulation very powdery with consequent problems of safety for work environments where the particulate in the air has to observe very strict limits.

Moreover the Applicant has found that pellets/blocks protected by a hydrophobic covering can easily be attacked by humidity when a minimum portion of covering is removed or broken accidentally, for example when the form breaks during the introduction in the appropriate distributors, or is slightly bitten by the rodent, making it ineffective.

CN101112198 describes a non-toxic rodenticidal composition containing 60-80% by weight of cement, 20-40% by weight of a generic edible fat and various common additives in the rodenticidal baits including food flavourings.

This composition however would not appear to be highly palatable given the high quantity of cement in the composition.

It is to be noted that, in the art of rodenticidal baits, it is highly desirable to have available rodenticidal compositions which show also an improved palatability, as well as high efficacy, even after long periods of storage (high shelf-life) in different environmental conditions (e.g. acid pH and/or presence of water) so as to be able to be used in any environment, for example in drains, manholes and sewers.

The object of the present invention is that of having available a rodenticidal formulation able to overcome, also in part, the disadvantages of the prior art, in particular a composition substantially atoxic or eco-toxicologically acceptable, stable in warm-humid environmental conditions, in particular with high humidity, which does not require rodenticidal active ingredients of the anticoagulant type or requires them in very low quantities, smaller than those used in the prior art, but which is effective in deratization in that stable also in conditions of acid pH.

Another object is that of having available such a formulation which is also highly palatable and technically and economically advantageous, and can be formulated both in the form of fresh paste and pellets as well as paraffin block and which can be obtained with a simple, efficient and short-lasting process.

A further object is that of having available rodenticidal formulations having high efficacy and improved palatability, with such properties that can be maintained in time, also after ageing of the composition itself (prolonged shelf-life).

These objects are achieved by the rodenticidal formulation in accordance with the invention having the features listed in the annexed independent claim 1.

Advantageous embodiments of the invention are disclosed by the dependent claims.

The composition which is the object of the present invention suitable for forming a rodenticidal bait in the form of fresh paste, pellets or paraffin block, preferably fresh paste, is a formulation of negligible toxicity and extreme palatability, which comprises, one mixed with the other,
A) at least one inorganic solidifying agent and modifier of the pH, capable of solidifying in the presence of water, selected from among hydraulic binders such as Portland cement, quick set cement, anhydrous calcium sulfate (anhydrite), calcium sulfate dihydrate [CaSO₄·2H₂O], calcium sulfate hemihydrate [(CaSO₄)₂·H₂O]; or mixtures thereof,
B) at least one palatable inorganic or organic hygroscopic and/ or hydrophilic agent which swells and increases in volume in the presence of water, changing consistency, said agent not including flours while comprising dextrins, or mixtures thereof with starch and/or cereal bran;
C) at least one hydrophobic binder, palatable for rodent species, selected from
   - oils, butters, waxes and vegetable and/or animal fats, in liquid or solid form at room temperature; or mixtures thereof with lower quantities of paraffin fats,
   - paraffin fats, in the case of paraffin blocks, with the condition that their content is lower or equal to 20% by weight with respect to the weight of the total composition;
D) at least one inert filler selected from charcoal, clay and silicates in general, vermiculite, or mixtures thereof;
E) at least one palatable substance to improve the palatability of the bait; and optionally
F) at least one deterrent bittering agent to avoid accidental ingestions, in amounts lower than 1% by weight; and/or
G) at least one active ingredient chosen from among a rodenticidal agent, a sedative or a biological derivative able to perform a rodenticidal action, also aimed at only the control of reproduction; or mixtures thereof; and optionally
H) one or more hydroxides of alkaline metals, preferably calcium hydroxide, as stabilizer of the active ingredient G); and/or
L) one or more additives chosen from among preservatives, emulsifying agents, pigments and/or colouring agents for highlighting the presence of the rodenticidal bait, antioxidant additives, coadjuvants for increasing processability, substances reactive to the ultraviolet,
   said component C) being in a mixture with the remaining components of said composition.

"Fresh paste" here is intended to identify a highly viscose rodenticidal composition with plastic behaviour.

Natural hygroscopic substances here are intended to identify those hydrophilic substances capable of absorbing promptly the molecules of water present in the surrounding environment and of increasing considerably in volume. The flours which with water do not swell up do not belong to this category.

"Inert" filler here is intended to identify those elements that are added to increase the hardness of the finished product and increase the flowability during production but which do not react with water in any way either by swelling up or by changing consistency. It is preferable that the composition contains dextrin as will be described here below in detail.

Preferably component A) is at least 5% by weight, component B) is at least 5% by weight and component C) is at least 5% by weight, the remaining part to 100% being the total quantity of the remaining components D)+E)+F).

The formulation defined in this way, even when without active ingredient G), is found to be a rodenticidal bait highly effective in deratization in that the palatable hydroabsorbent agents B) defined above, which is highly hygroscopic in nature, tend to "attract" considerable quantities of water, with the result of increasing considerably in volume inside the organism of the rodent, and at the same allowing the solidifying agents A) to form a solid agglomerate with a consequent intestinal blockage.

In fact the greater the quantity of water available, the more the reaction of solidification of the solidifying agents is complete.

It should be noted that in the prior art the use of palatable hygroscopic substances as defined above is not foreseen, as coadjuvant, to increase the efficacy of solidification of the solidifying agents in the intestinal blockage.

Since the intestinal blockage leads to reduced mobility of the rodent but not always to the death in a short period of time (understood as 24-48 hours), it is preferable to add to the aforesaid formulation also one or more of the rodenticidal active ingredients G) known in the art, but in quantities smaller than what is normally used in conventional baits: in particular it is possible to reduce the dosage of the aforesaid rodenticidal active ingredient from the current 50 ppm (anticoagulants) to only 10 ppm.

The decrease in the dosage of the active ingredient G) is made possible thanks to the solidifying components A) which modify the pH towards alkalinity making the pH of the formulation slightly alkaline, preferably around pH 7.5: this encourages the stability of the active ingredients in the presence of water (humidity), specifically those anticoagulants which, as is known, are subject to phenomena of acid hydrolysis when they come into contact with water/humidity or when the pH of the formulation tends towards acidity.

Therefore a greater quantity of poisonous active ingredient than necessary is no longer required for compensating the loss due to low stability as takes place in known rodenticidal formulations.

The component A) is therefore found to perform both a function of stabiliser of pH for the anticoagulant active ingredient G) and of non-toxic rodenticidal agent. Moreover the combined use of the component A) with the aforesaid palatable hygroscopic agents B) makes the rodenticidal efficacy safe as well as conferring high palatability.

The present formulations, with or without active ingredient G), are also provided with high efficacy, even after prolonged storage, thanks to the use of the binder C) in a mixture with the other components which, without being bound to any theory, is presumed to create a protective film on the components A) and B), as well as on the active ingredient G) if present, which makes them resistant to atmospheric humidity, therefore allowing maintaining in time of the solidifying action of component A), of the hydroabsorbent action of component B), and of the rodenticidal activity of the active ingredient G) if present, so as to make these formulations stable in warm-humid and/or high humidity conditions, and effective also after long periods of storage (high shelf-life).

In fact tests performed by the Applicant, with or without the use of the aforesaid binder C), have shown the greater chemical and physical stability of the present compositions in warm-humid conditions with respect to those without this binder C). See the examples on this subject.

In fact this component C) appears to act as protector of the formulation against humidity and other environmental factors, probably thanks to the fact that it goes to "cover" the same formulation.

It is to be noted that, since the intestinal blockage caused by the present formulations entails reduced mobility of the rodent, it is possible to use the present formulations (when without the active ingredient G)) as monitoring baits in association with conventional traps, such as those with a swing door, in deratization systems.

This is particularly advantageous where it is not advisable to resort to a poisonous deratization system due to problems of safety, for example in the case of domestic and household use where the infestation can generally be traced to one or two rodents. In this case the system of deratization deriving from the combined use of the present bait without toxic substances with a conventional trap allows the problem of infestation to be solved without having to resort to poisonous baits and to specialised deratization firms which are equipped and authorised to handle these poisonous baits.

It is to be noted that the present formulations without active ingredient G) can be used as monitoring baits also in association with conventional toxic/poisonous baits normally used in professional deratization systems managed by firms specialised in deratization.

In fact the baits for monitoring or monitoring rodent baits which do not contain any rodenticidal active ingredient G) help to quantify the numerical extent of the infestation in order to establish the method, the most appropriate disinfestation system and the number of poisonous baits or traps to be positioned on site.

This evaluation allows therefore use of a precise number of poisonous/toxic baits (and also of conventional traps) thus reducing the risk of accidental contamination (and wastes of conventional traps/baits).

Moreover thanks to the fact that both this binder C) and the hygroscopic component B) are normally highly palatable, the present formulation shows an extremely high palatability, much greater with respect to known rodenticidal formulations, in particular with respect to those of monitoring which generally do not include any hygroscopic component B).

Component A) is an active ingredient which, mixed with water, forms a paste which hardens or "sets" following chemical reactions which take place during the hydration processes. The hardening property is due to the presence of a series of compounds capable of reacting with the water giving rise to insoluble or poorly soluble hydrated products, and provided with cementing properties (hydraulic properties).

The component A) is preferably selected from among anhydrous calcium sulfate (anhydrite), calcium sulfate dihydrate [CaSO₄·2H₂O], calcium sulfate hemihydrate [(CaSO₄)₂·H₂O]; or mixtures thereof.

In particular, component A) is present in quantities below 30% by weight, preferably lower than 25%, with respect to the total weight of the composition since the Applicant has found that higher quantities make the rodenticidal formulation very powdery with consequent problems of safety for work environments in terms of particulate in the air during the mixing of the ingredients (which are all pulverulent solids).

Component B) is a dextrin, optionally in a mixture with one or more hygroscopic substances chosen from among sodium sulfate, magnesium sulfate, cereal bran, starch, synthetic and vegetal sponges, "hydrogel" hydroabsorbent polymers or mixtures thereof.

The Applicant has in fact found that the dextrins, in addition to acting as hygroscopic/hydrophilic element giving a certain sense of satiety which allows the product to slow down gastrointestinal transit increasing thereby the efficacy thereof, act also as enhancer of flavour and aroma of "fresh" product, conferring to the formulation an improved aroma which is long lasting, even after ageing of the product.

As synthetic and vegetal sponges known products can be cited, identified generally by the term "FLORAL FOAM", "CELLULOSE HYDRO" or "hydrocellulose".

As "hydrogel" hydroabsorbent polymers mention can be made of polyacrylate, acrylonitrile copolymers and crosslinked polymers, all commonly used products, for example, in babies' nappies and in nursery gardening.

Preferably when component A) is cement, component B) does not contain bentonite.

For component C), as vegetal fat any vegetal lipid can be understood which appears as vegetal oil in solid form (fat) or liquid form, butters, waxes, such as for example an ester of glycerine formed with a fatty acid.

In fact, according to the structure (linear or branched), of the saturation or unsaturation and of the number of carbon atoms, there are fluid lipids at ambient temperature (OILS), pasty (BUTTERS and FATS) or solid (WAXES).

As fatty acids mention can be made of oleic, palmitic, linoleic and stearic acid.

As vegetable oils mention can be made of peanut oil, castor oil, olive oil, palm oil, coconut oil, sesame oil, grape seed oil, soybean oil, rapeseed oil. It is understood that other vegetable oils obtained through pressing or extraction with solvents, from fruits, from seeds or from germinated seeds, can be used in the present formulation.

As vegetable fats mention can be made of vegetable margarines, peanut butter, cocoa butter, soya lecithin.

As animal fats mention can be made of butter, lard and the like.

These vegetable/animal oils/fats can also be raw, refined, hydrogenated or partially hydrogenated.

As "paraffin fats" here those paraffin hydrocarbon compounds (lipids) are understood, normally used as emollients, lubricants, waterproofing agents and insulants, such as for example mineral oil (paraffinum liquidum), petroleum jelly (petrolatum), solid paraffins such as microcrystalline wax.

Particularly preferred as "paraffin fat" is a paraffin wax having melting point between approximately 47°C and 64°C.

Said component C) is used as binding agent in the composition of the invention and in considerable quantities when baits are also required in paste form, for example in quantities comprised between 30 and 60%.

In fact the quantity of component C) in the compositions depends essentially on the type of bait that is to be obtained and therefore on the consistency which the mixture of the components A)-G) has to have in order to be processed and transformed into paste or pellet, for example such a consistency as to encourage the extrusion of the mixture into pellets.

In the case of paraffin block, component C) is chosen from among a paraffin fat and a mixture of paraffin fats with said oils, butters, waxes and vegetable/animal fats. In fact the paraffin can serve as covering for the so-called paraffin block in order to increase further its features of resistance in humid environments such as, for example, drains, manholes and sewers.

In the case of paraffin block, when the binder C) is a mixture of paraffin fats with said oils, butters, waxes and vegetable/animal fats, the paraffin is at least 10% by weight, preferably at least 20%, even if it can constitute more than 25%, but less than 50% by weight of said mixture formed by paraffin fats and oils, butters, waxes and vegetable/animal fats.

However, in general, it is preferable to use the smallest quantity possible of paraffin fat as this reduces considerably the palatability of the final composition: in general the compositions of the present invention in the form of paste or pellet are preferably substantially free of paraffin fats. The paraffin blocks in accordance with the invention, when they contain only paraffin fats as component C), foresee quantities of said paraffin fats lower or equal to 20% by weight with respect to the total weight of the formulation.

It is to be noted that if the component G) is present, it is preferable to use as binder C) those fats/oils/waxes/butters which have a melting point higher than 36-39°C, in order to prevent this fat/oil/wax/butter from being released from the composition in warm environments, making the component G), which is liposoluble, migrate and reducing the efficacy of the preparation.

Component C) is preferably raw palm oil, also hydrogenated, optionally in a mixture with paraffin in the case of paraffin block.

As vegetal flours mention can be made of edible flours of cereals such as wheat, maize, rice, barley, oat, corn, flours of tapioca, flour of chestnuts, flour of coconuts or mixtures thereof; potato starch, dextrins and the like.

Said edible flours can also be in a mixture with small amounts of wood flours, wood shavings, cellulose and the like, in particular in the formulations in pellet form, in order to give a high consistency to the mixture to be extruded. Generally wood flours and wood shavings are preferred in said formulations, in amounts less than 5% by weight.

For component E), as palatable substances mention can be made of vegetal flours as described above, whole and/or chopped grains, one or more sugars (carbohydrates) such as saccharose, glucose also syrup, sodium glutamate, sodium benzoate, powder milk, cocoa powder, fish flours and fish oil, and the like.

It to be understood that in order to form an appropriate component E), highly palatable to rodents, it is possible to use one or more of the aforesaid palatable substances in a mixture with one or more of the compounds given above for component C).

The composition contains dextrin as component B), alone or in mixture with other components B). In practice it is highly advantageous that the composition comprises dextrin, as one of components B).

For component F), as bittering agent, denatonium benzoate or saccharate can be mentioned.

For component G), as rodenticidal active ingredient a rodenticidal agent with anticoagulant action is preferably used or with peripheral vasoconstricting action, preferably a rodenticidal active ingredient with anticoagulant action.

As rodenticidal agent with anticoagulant action an agent can be used that belongs to the family of the hydroxycoumarins (warfarin, bromadiolone, brodifacoum, difenacoum), or to the family of the indandiones (chlorophacinone, diphacinone).

As rodenticidal agent with peripheral vasoconstricting action norbormide can be mentioned.

Alpha-chloralose can be used as sedative.

Component H) is advantageously used when the formulation foresees the addition of one or more rodenticidal agents with anticoagulant action described above as component G).

This component H) acts in fact as further stabiliser of the active ingredient G) in that it has been found that the hydroxides of alkaline metals, in particular calcium hydroxide, confer improved stability in time to the active ingredients with anticoagulant action and consequently improve the efficacy of these active ingredients in warm and humid environments, leading to an improved stabilisation of the formula.

Moreover the fact that said stabilisers H) shift the pH of the formula towards the basal level entails an increased palatability of the formulation in that this basal level encourages the transformation of the oils used as component C) into their corresponding esters which are more palatable compared to the same oils.

The overall quantity by weight of hydroxides of alkaline metals is about 50-90 times higher than that of the active ingredient, preferably the calcium hydroxide is about 75-80 times higher with respect to the weight of the active ingredient.

The formulation of the present invention contains the aforesaid components A)-G) preferably in the following quantities (% by weight):
A) 15-30%, preferably 25-30%
B) 15-30%;
C) 10-30%;
D) 15-30%;
E) quantity necessary to 100%, generally comprised between 0.1-8%, preferably 0.5-6%;
F) 0.001-0.01%, preferably 0.001%;
G) from 0 to 0.5%.

In the case of formulation in paste form, the component C) is generally in quantities comprised between 25 and 30% by weight.

In the case of formulation in pellet form, the component C) is generally in quantities of the order of 10% by weight and has substantially the function of aiding the extrusion of the mixture of the pellet.

In the case of the formulation in paraffin block form, the component C) in the form of mixture of paraffin fat with vegetable/animal fats/oils/waxes/butters is present in quantities comprised between 20-40% by weight, where the content of paraffin fat in said mixture is such as to be below 20% by weight with respect to the total weight of the formulation.

Moreover the ratio in weight between said component C) and the filler D) is chosen so as to obtain a composition with the appropriate consistency according to the type of process whereto it has to be subjected, for example a ratio of 2:1 weight/weight in the case of paste.

If the rodenticidal component G) is also to be used in the present formulation, it is preferably dissolved in one or more solvents palatable to rodents, such as for example polyethylene glycol, polypropylene glycol, or mixtures thereof, in quantities equal to about 0.25% by weight if this active ingredient belongs to the family of the anticoagulants. For other rodenticidal components, they are to be "prediluted" dry with the flours or with the sugar.

The compositions of the present invention, with or without component G), can also contain, in quantities below 1% by weight, also additives L) such as
- preservatives against fungi, yeasts, bacteria and the like, such as for example, and not exclusively, sorbic acid and bronopol, in amounts generally comprised between 0.01-0.5% by weight with respect to the overall weight of the composition A)-G) described previously;
- emulsifying agents such as triethanolamine (TEA), in amounts generally comprised between 0.1-1% by weight; with respect to the overall weight of the composition A)-G) described previously;
- pigments and/or colouring agents to highlight the presence of the rodenticidal bait, preferably pigments which create a blue colour, generally in amounts comprised between 0.01-0.5% by weight with respect to the overall weight of the composition A)-G) described previously;
- antioxidant additives to prevent the vegetable oils used turning rancid, such as for example BHA, BHT or mixtures thereof, in amounts generally comprised between 0.01-0.5% by weight with respect to the overall weight of the composition A)-G) described previously;
- coadjuvants for increasing the processability and/or the extrusion and/or the cohesion of the formulation, in particular when in paste or pellet form, such as glycerine, high-boiling paraffin powder, carboxymethyl cellulose and the like;
- substances reactive to the ultraviolet such as colouring agents or pigments, in quantities generally comprised between 0.1-0.01% by weight with respect to the total composition.

It is to be noted that particularly preferred are the compositions as defined above which contain at least one or more substances reactive to the ultraviolet rays since they allow, above all in the case of monitoring baits, a correct evaluation of the habits and the spatial distribution of the rodents, as well as the palatability, simply by inspecting the faeces found in the environment monitored by an appropriate UV lamp.

A preferred rodenticidal formulation in paste form is the following (% in weight, with the components listed in the order of adding/processing):

| | |
|---|---|
| palm oil | 24 |
| peanut butter | 2 |
| paraffin powder | 1 |
| sugar | 1 |
| fish oil | 0.5 |
| powder milk | 1 |
| cocoa butter | 0.5 |
| anhydrous calcium sulfate | 1 |
| soya lecithin | 0.5 |
| starch | 8 |
| calcium sulfate hemihydrate | 29 |
| bran | 10 |
| dextrin | 3 |
| maize flour | 7.299 |
| wheat flour 0 | 7 |
| barley flour | 3 |
| pine sawdust | 1 |
| antioxidants (BHA/BHT 1:1) | 0.1 |
| sorbic acid (preservative) | 0.1 |
| denatonium benzoate | 0.001 |

A preferred rodenticidal formulation, in pellet form, in accordance with the present invention, is the following (% by weight, with the components listed in the order of adding/processing) :

| | |
|---|---|
| palm oil | 14.5 |
| peanut butter | 0.5 |
| charcoal | 7.399 |
| sugar | 3 |
| anhydrous calcium sulfate | 15 |
| carboxymethyl cellulose (additive) | 0.5 |
| starch | 9 |
| calcium sulfate hemihydrate | 15 |
| bran | 5 |
| dextrin | 2 |
| maize flour | 2 |
| wheat flour 0 | 25 |
| pine sawdust | 1 |
| sorbic acid (preservative) | 0.1 |
| denatonium benzoate | 0.001 |

A preferred rodenticidal formulation, in block form, in accordance with the present invention, is the following: (% by weight, with the components listed in the order of adding/processing):

| | |
|---|---|
| paraffin | 20 |
| peanut butter | 1 |
| vermiculite | 5 |
| sugar | 39.899 |
| anhydrous calcium sulfate | 1 |
| starch | 5 |
| calcium sulfate hemihydrate | 21 |
| bran | 5 |
| dextrin | 2 |
| sorbic acid (preservative) | 0.1 |
| denatonium benzoate | 0.001 |

The advantage of the present formulation is that of being an ecologically favourable bait, both in the form of fresh paste, pellet or paraffin block, thanks to the lack of common toxic rodenticidal active ingredients, making it in this way an eco-toxicologically advantageous system with increased effects on the target organism such as to require the presence of a rodenticidal agent only in a minimal part or even its total absence.

A further advantage is that this composition has improved stability thanks to the use of the binder C) which avoids the solidification of the solidifying agent A) which in turn helps the chemical and physical stabilisation of the formulation when a rodenticidal active ingredient is present.

This increased chemical and physical stability is particularly advantageous in unfavourable climate conditions (warm-humid environment) and in the presence of an active ingredient G) belonging to the family of the anticoagulants.

The formulation of the invention can be prepared using known methods of mixing yet using high-power rapid mixers, for example at least 10kW, for example mixing dry, while stirring, first one or more solid pulverulent ingredients of the components A), B), D), E), F), and then the pulverulent mixture obtained in this way is mixed with one or more ingredients of component C), again in high-power rapid mixers, adding then, if necessary, the optional active ingredient G), previously dissolved in appropriate solvent, until obtaining a homogeneous mixture having the consistency of paste or paraffin block or such a flowability as to allow its subsequent processing by means of extrusion or moulding, in the case of pellets.

An example of high-power rapid mixers is for example a mixer with one or more ribbons, for example with six ribbons, with power of 10 kW per ribbon and equipped with inverter.

This type of mixer (blender) is suitable for mixing mixtures of ingredients composed of powders and liquids, having dissimilar grain sizes and different specific weights so as to amalgamate said heterogeneous products until obtaining homogeneous and amalgamated mixtures which do not separate due to a subsequent change in environmental conditions (e.g. temperature).

It is also possible to mix one with the other the solid pulverulent ingredients of the components A), B), D), E), F), and the ingredients of component C) in a different manner, for example by mixing a first solid pulverulent ingredient of one of components A), B), D), E), F), and a first ingredient of component C), and then add to this mixture a second solid pulverulent ingredient of one of components A), B), D), E), F), and a second ingredient of component C), and so on, provided that high-power mixers as defined above are used.

The Applicant has in fact found that by using high-power mixers, with high speed of mixing, for example mixers with six horizontal ribbons with high power (10 kW per ribbon driven by inverter), it is possible to mix very thoroughly the hydrophobic agent C) having an oily nature with the other pulverulent components, in particular with calcium sulfate, in a short time and in an effective manner.

These high-power mixers bring the processing mass to temperatures of approximately 35°C and therefore allow the "diffusion" of the hydrophobic compound C) homogeneously, whatever its original form (fat, wax or liquid) and with an economically feasible production process since the production times are approximately 30-40 minutes.

It should be noted that in the abovementioned preparations it is preferable to add the active ingredient in the form of solution/dispersion of the active ingredient in a palatable solvent, prepared previously. In fact, due to the highly hazardous nature of the molecules, given their marked anticoagulant activity, the rodenticidal active ingredients of the family of the anticoagulants are used in the form of liquid preparations in specific palatable solvents containing approximately 0.25% by weight of active ingredient.

Preparations of active ingredients with a base of polyethylene, ethylene or propylene glycols are preferred in that they are highly palatable solvents for rodents.

After having obtained the homogeneous mixture of ingredients, it is unloaded from the rapid mixer and stored in a storage tank, and subsequently sent by means of an Archimedean screw to a station of packaging in single sachets, similar to tea bags, in the case of formulation in the form of fresh paste.

Alternatively said mixture is sent immediately to an extruder or moulding device in the case of formulation in pellets (without using the storage tank) or to an appropriate extruder in the case of paraffin block.

Numerous detail modifications and changes, within the reach of a person skilled in the art, may be made to the present embodiment of the invention, in any case coming within the scope of the invention disclosed by the annexed claims.

The following are non-limiting examples illustrating the present invention.

### EXAMPLES

### Example 1

The three preferred formulations given above inclusive of component C) yet without active ingredient G), in pellet, paste and paraffin block forms, obtained according to the method described above, were subjected to tests of chemical and physical stability, performing, on the respective closed packaging, a test of accelerated ageing in accordance with the method CIPAC MT 46 (at 54°C for 2 weeks for the pellet, for 12 weeks at 35°C for the paste and the block), checking the following parameters before and after ageing:
- size and weight,
- colour,
- odour, after having opened the packaging to evaluate the palatability of the formulation after ageing.

Another three formulations (in pellet, paste and paraffin block form), similar to the preferred ones given above and also containing approximately 50 ppm of active ingredient G) (brodifacoum), were subjected to the same tests of stability described above, checking the same parameters (size, weight, colour, odour) and the content of active ingredient before and after ageing.

For the 3+3 formulations described above the results are set out here below.

### PELLET:

- size: no change, also in weight, worthy of note;
- colour: change towards dark just perceptible;
- odour: on opening the closed packaging a pleasant and sweetish odour can be smelled, which confirms the palatability of the formulation even after ageing;
- content of active ingredient (if present): from 51 ppm to 48 ppm, which confirms the substantial stability of the same even after ageing.
The aforesaid results demonstrate a high shelf-life even after long periods of storage of the present composition in pellet form.

### PASTE:

- size: deformation restrained by the wrapping (tea bag) and slight seepage of oil, loss of weight below 2% which confirms the substantial stability of the formulations in paste form;
- colour: change just perceptible;
- odour: on opening the closed packaging a biscuit odour can be smelled, which confirms the palatability of the formulation even after ageing;
- content of active ingredient (if present): from 52 ppm to 47 ppm, which confirms the substantial stability of the same even after ageing.
The aforesaid results demonstrate a high shelf-life even after long periods of storage of the present composition in paste form.

### BLOCK:

- size: deformation of the block such as not to jeopardise the use, loss of weight below 0.5% which confirms the substantial stability of the formulations in block form;
- colour: no change;
- odour: on opening the closed packaging, no unpleasant odour;
- content of active ingredient (if present): from 50 ppm to 46 ppm, which confirms the substantial stability of the same even after ageing.
The aforesaid results demonstrate a high shelf-life even after long periods of storage of the present composition in paraffin block form.

### Example 2

In order to evaluate the effective capacity of "protection" of the binder component C), tests were also performed on stability to humidity by subjecting the three formulations of the preceding example without active ingredient G) (pellet, paste, block) to a "maturing" in thermostat-controlled environment at a temperature of 20°C and 50% relative humidity for 3 weeks.
The same treatment was performed on three similar formulations yet without component C) and active ingredient G) (pellet, paste, block).
The three + three formulations "matured" in this way were then subjected to a mixing with water, "blending them" manually in a mortar with pestle with a quantity of water equal to 25% of water with respect to their weight. The results obtained are the following:
PELLET with component C) (15% by weight of the palm oil and peanut butter mixture):
   after 3 minutes of blending by hand in a mortar, the mass is very hard after 7 minutes of rest: this indicates that despite the exposure to humidity as above, the hardening did not take place immediately.
PELLET without component C):
   absorption of water by the mixture and crumbling of the same without solidification of the same during blending by hand in the mortar, a condition which persists even after rest;
PASTE with component C) (28.5% by weight of the palm oil, peanut butter, paraffin, fish oil, cocoa butter, soya lecithin mixture):
   after 3 minutes of blending by hand in a mortar, the mass is very hard after 11 minutes of rest: this indicates that component C) protects against humidity in that the hardening does not take place immediately after exposure to the humidity;
PASTE without component C):
   crumbling without solidification of the same during blending by hand in the mortar, a condition which persists even after rest: this indicates that hardening took place immediately after exposure to humidity;
BLOCK with component C) (21% by weight of the paraffin and peanut butter mixture):
   after 3 minutes of blending by hand in a mortar, the mass is very hard after 14 minutes of rest;
BLOCK without component C):
   crumbling without solidification of the same during blending by hand in the mortar, a condition which persists even after rest.
The results given above indicate that the formulations without component C) are very sensitive to hydration, given the high total quantity of the mixture A)+B), in particular when they are formulations in pellet form.

This demonstrates moreover that the use of the "protective" component C) is particularly useful where the conditions of processing, for example high pressures and high temperatures, could jeopardise the stability of the components as in the case of extrusion into pellets.
It is to be noted that the effect of component C) is less evident in the formulation in paraffin block form in that in order to form the comparative block without C), it was in any case necessary to use a certain quantity of paraffin equal to approximately 20-25% by weight in order to generate a paraffin block.

### Example 3 (comparative)

Accelerated ageing tests were carried out, performed according to the standard procedures at 54°C and controlled relative humidity for 7 and 15 days, similarly to what is stated in example 1, using a rodenticidal paraffin block containing an anticoagulant rodenticidal active ingredient, known commercially by the name "Protect® wax block compressed" of the firm Babolna-bio, provided with a waxy cover obtained through immersion of the finished block in molten paraffin.
The block of the prior art, before being subjected to these tests of dimensional stability, was lightly broken up in order to remove the cover of a small portion of block.
After the test the block was found to be disgregated as demonstration of the attack by the atmospheric humidity.
The test was repeated with a new sample without breaking any portion of cover: in this case too the block was found to be disgregated in that the cover dissolved in some points leaving portions of sample exposed to the atmosphere.
The comparison of the dimensional stability of the paraffin block of example 1 in accordance with the invention with that of the comparison block of comparative example 3 shows that the mixing of components C) with the remaining components of the formulation is more effective with respect to covering of the formulation by means of a waxy element similar to that of component C).

### Example 4

In order to evaluate the effective coadjuvant capacity of the hygroscopic component B) palatability tests were performed in a natural environment freely administering in special containers the preferred formulation in pellets described previously in the text and the same formulation in pellets without component B) (dextrin) to the three harmful rodent species (Mus Musculus, Rattus Norvegicus and Rattus Rattus) in three locations chosen for the purpose.

The results obtained were the following: a greater percentage consumption of the preferred formulation of the order of 60% was noted compared to that without preferred components.
It was concluded from this test that the preferred formulation, thanks to the specific components, is more palatable.

## Claims

1. Rodenticidal composition, in the form of fresh paste, pellet or paraffin block, of negligible toxicity and extreme palatability, which comprises, one mixed with the other,
A) at least one inorganic solidifying agent and modifier of the pH, capable of solidifying in the presence of water, selected from among hydraulic binders such as Portland cement, quick set cement, anhydrous calcium sulfate (anhydrite), calcium sulfate dihydrate [CaSO₄·2H₂O], calcium sulfate hemihydrate [(CaSO₄)₂·H₂O]; or mixtures thereof,
B) at least one palatable inorganic or organic hygroscopic and/or hydrophilic agent which swells and increases in volume in the presence of water, changing consistency, said agent not including flours while comprising dextrins, or mixtures thereof with starch and/or cereal bran;
C) at least one hydrophobic binder, palatable for rodent species, selected from
- oils, butters, waxes and vegetable and/or animal fats, in liquid or solid form at room temperature; or mixtures thereof with lower quantities of paraffin fats,
- paraffin fats, in the case of paraffin blocks, with the condition that their content is lower or equal to 20% in weight with respect to the weight of the total composition;
D) at least one inert filler selected from charcoal, clay and silicates in general, vermiculite, or mixtures thereof;
E) at least one palatable substance to increase the palatability of the bait;
said component C) being in a mixture with the remaining components of said composition
said palatable substance(s) B) being a coadjuvant to increase the efficacy of solidification of the solidifying agents A) in the intestinal blockage;
provided that when A) is cement, B) does not contain bentonite.

2. Composition according to claim 1 further comprising
- at least one deterrent bittering agent F) to avoid accidental ingestions, in amounts lower than 1% by weight; and/or
- a component G) selected from among a rodenticidal agent, preferably having an anticoagulant action or a peripheral vasoconstricting action; a sedative or a biological derivative able to perform a rodenticidal action, also aimed at only the control of reproduction; or mixtures thereof.

3. Composition according to claim 1 or 2 wherein component A) is selected from anhydrous calcium sulfate (anhydrite), calcium sulfate dihydrate [CaSO₄·2H₂O], calcium sulfate hemihydrate [(CaSO₄)₂·H₂O]; or mixtures thereof.

4. Composition according to claim 1 or 2 wherein component B) is in a mixture with one or more elements chosen from among dehydrating and/or desiccant substances such as sodium sulfate, also anhydrous, magnesium sulfate, also anhydrous; high porosity substances such as bentonite, synthetic and vegetal sponges, "hydrogel" hydroabsorbent polymers, also in the form of pellets, or mixtures thereof.

5. Composition according to any one of the preceding claims wherein the binder C) is selected from among peanut oil, castor oil, olive oil, palm oil, coconut oil, sesame oil, grape seed oil, soybean oil, rapeseed oil, said oils being raw, refined, partially or completely hydrogenated; vegetable margarines, peanut butter, cocoa butter, soya lecithin; mineral oil (paraffinum liquidum), petroleum jelly (petrolatum), solid paraffins such as microcrystalline wax, paraffin wax having a melting point in the range of 47-64°C; or combinations thereof.

6. Composition according to any one of the preceding claims wherein component E) is selected from among edible flours of cereals such as wheat, maize, rice, barley, oat, corn, flours of tapioca, flour of chestnuts, flour of coconut or mixtures thereof; potato starch, dextrins and the like, optionally in a mixture with small amounts of wood flours, wood shavings, cellulose and the like; whole and/or chopped grains, one or more sugars (carbohydrates) such as saccharose, glucose also syrup, sodium glutamate, sodium benzoate, powder milk, cocoa powder, fish flours and fish oil, and the like.

7. Composition according to any one of the preceding claims from 2 to 6 wherein component G) is selected from among a rodenticidal agent belonging to the family of the hydroxycoumarins (warfarin, bromadiolone, brodifacoum, difenacoum), to the family of the indandiones (chlorophacinone, diphacinone), or norbormide.

8. Composition according to any one of the preceding claims 2 to 7 wherein the above components A)-G) are in the following quantities (% by weight):
A) 15-30%, preferably 25-30%
B) 15-30%;
C) 10-30%;
D) 15-30%;
E) quantity necessary to 100%, generally comprised between 0.1-8%, preferably 0.5-6%;
F) 0.001-0.01%, preferably 0.001%;
G) from 0 to 0.5%.

9. Composition according to any one of the preceding claims comprising moreover one or more hydroxides of alkaline metals H), preferably calcium hydroxide, as stabiliser of the active ingredient G) when the component G) is a rodenticidal agent.

10. Composition according to any one of the preceding claims comprising moreover substances reactive to the ultraviolet such as colouring agents or pigments, in quantities generally comprised between 0.1-0.01% by weight with respect to the total composition.

11. Process for preparing a composition according to any one of the preceding claims 1-10, in the form of paste, pellets or paraffin block, comprising:
- dry mixing, while stirring in a high-power rapid mixer, one or more solid pulverulent ingredients of components A), B), D), E) and F) if present,
- mixing of the previously obtained pulverulent mixture with one or more ingredients of component C) inside said high-power rapid mixer,
- optionally adding the active ingredient, component G),
- optional adding of component H) when component G) is a rodenticidal agent, and
- mixing of the aforesaid components in said high-power rapid mixer such as to obtain a homogeneous mixture having the consistency of a paste or paraffin block, or a flowability such as to allow the extrusion thereof in the case of pellets.

12. Use of the compositions according to any one of the preceding claims 1-10 as monitoring baits in association with conventional traps or with poisonous rodenticidal baits of a deratization system.

## Patentansprüche

1. Rodentizide Zusammensetzung in Form frischer Paste, eines Kügelchens oder Paraffinblocks vernachlässigbar geringer Toxizität und extremer Schmackhaftigkeit, die, eines mit dem anderen gemischt, Folgendes umfasst
A) mindestens ein anorganisches Verfestigungsmittel und Modifiziermittel des pH-Werts, das in der Lage ist, in Gegenwart von Wasser verfestigt zu werden, ausgewählt unter hydraulischen Bindemitteln wie Portlandzement, schnell abbildendem Zement, wasserfreiem Calciumsulfat- (anhydrit), Calciumsulfatdihydrat [CaSO₄·2H₂O], Calciumsulfathemihydrat [(CaSO₄)₂·H₂O] oder Mischungen davon,
B) mindestens ein schmackhaftes anorganisches oder organisches hygroskopisches und/oder hydrophiles Mittel, das in Gegenwart von Wasser aufquillt und sein Volumen erhöht, wobei die Konsistenz geändert wird, wobei das Mittel keine Mehle umfasst, während es Dextrine oder Mischungen davon mit Stärke und/oder Getreidekleie umfasst;
C) mindestens ein hydrophobes Bindemittel, das für Nagetierspezies schmackhaft ist, ausgewählt unter
- Ölen, Buttern, Wachsen und pflanzlichen- und/oder tierischen Fetten, bei Raumtemperatur in flüssiger oder fester Form, oder Mischungen davon mit geringen Mengen Paraffinfetten,
- Paraffinfetten, im Falle von Paraffinblöcken, mit der Bedingung, dass ihr Gehalt geringer oder gleich 20 Gew.-% mit Bezug auf das Gewicht der gesamten Zusammensetzung ist;
D) mindestens einen inerten Füllstoff ausgewählt unter Holzkohle, Ton und Silicaten im Allgemeinen, Vermiculit oder Mischungen davon;
E) mindestens eine schmackhafte Substanz zum Erhöhen der Schmackhaftigkeit des Köders;
wobei die Komponente C) in einer Mischung mit den verbleibenden Komponenten der Zusammensetzung vorliegt,
wobei die schmackhafte(n) Substanz(en) B) ein Koadjuvans zum Erhöhen der Wirksamkeit der Verfestigung der Verfestigungsmittel A) bei der Darmblockade ist/sind;
vorausgesetzt, dass, wenn A) Zement ist, B) keinen Bentonit enthält.

2. Zusammensetzung nach Anspruch 1, ferner Folgendes umfassend
- mindestens ein abschreckendes bittermachendes Mittel F) zum Vermeiden versehentlicher Ingestionen, in Mengen von weniger als 1 Gew.-%; und/oder
- eine Komponente G) ausgewählt unter einem rodentiziden Mittel, das bevorzugt eine gerinnungshemmende Wirkung oder eine periphere gefäßverengende Wirkung aufweist; einem Beruhigungsmittel oder einem biologischen Derivat, das in der Lage ist, eine rodentizide Wirkung auszuüben, die auch nur auf die Unterdrückung der Vermehrung hinzielt; oder Mischungen davon.

3. Zusammensetzung nach Anspruch 1 oder 2, wobei die Komponente A) unter wasserfreiem Calciumsulfat- (anhydrit), Calciumsulfatdihydrat [CaSO₄·2H₂O], Calciumsulfathemihydrat [(CaSO₄)₂·H₂O] oder Mischungen davon ausgewählt wird.

4. Zusammensetzung nach Anspruch 1 oder 2, wobei die Komponente B) eine Mischung mit einem oder mehreren Elementen ausgewählt unter dehydrierenden und/oder trocknenden Substanzen wie Natriumsulfat, auch wasserfreiem, Magnesiumsulfat, auch wasserfreiem; hochporösen Substanzen, wie Bentonit, synthetischen und pflanzlichen Schwämmen, wasserabsorbierenden "Hydrogel"-Polymeren, auch in Form von Kügelchen, oder Mischungen davon, ist.

5. Zusammensetzung nach einem der vorhergehenden Ansprüche, wobei das Bindemittel C) unter Erdnussöl, Rizinusöl, Olivenöl, Palmöl, Kokosnussöl, Sesamöl, Traubenkernöl Sojabohnenöl, Rapssamenöl, wobei die Öle roh, raffiniert, teilweise oder vollständig gehärtet sind; Pflanzenmargarinen, Erdnussbutter, Kakaobutter, Sojalecithin; Mineralöl (Paraffinum liquidum),Petrolat (Petrolatum), festen Paraffinen wie mikrokristallinem Wachs, Paraffinwachs, das einen Schmelzpunkt im Bereich von 47-64 °C aufweist; oder Kombinationen davon ausgewählt wird.

6. Zusammensetzung nach irgendeinem der vorhergehenden Ansprüche, wobei die Komponente E) unter essbaren Mehlen von Getreiden wie Weizen, Mais, Reis, Gerste, Hafer, Korn, Mehlen von Cassava, Mehl von Kastanien, Mehl von Kokosnuss oder Mischungen davon; Kartoffelstärke, Dextrinen und dergleichen, wahlweise in einer Mischung mit geringen Mengen Holzmehlen, Sägespänen, Cellulose und dergleichen; ganzen und/oder zerkleinerten Körnern, einem oder mehreren Zuckern (Kohlehydraten) wie Saccharose, Glucose, auch Sirup, Natriumglutamat, Natriumbenzoat, Milchpulver, Kakaopulver, Fischmehlen und Fischöl und dergleichen ausgewählt wird.

7. Zusammensetzung nach irgendeinem der vorhergehenden Ansprüche 2 bis 6, wobei die Komponente G) unter einem rodentiziden Mittel, das zu der Familie der Hydroxycumarine (Warfarin, Bromadiolon, Brodifacoum, Difenacoum), zu der Familie der Indandione (Chlorophacinon, Diphacinon) gehört, oder Norbomid, ausgewählt wird.

8. Zusammensetzung nach irgendeinem der vorhergehenden Ansprüche 2 bis 7, wobei die obigen Komponenten A)-G) in den folgenden Mengen (Gew.-%) vorliegen:
A) 15-30 %, bevorzugt 25-30 %
B) 15-30 %;
C) 10-30 %
D) 15-30 %;
E) Menge, die für 100 % notwendig ist, die im Allgemeinen zwischen 0,1-8 %, bevorzugt 0,5-6 % liegt;
F) 0,001-0,01 %, bevorzugt 0,001 %;
G) 0 bis 0,5%.

9. Zusammensetzung nach einem der vorhergehenden Ansprüche, umfassend außerdem ein oder mehrere Hydroxide alkalischer Metalle H), bevorzugt Calciumhydroxid, als Stabilisator des Wirkstoffs G), wenn die Komponente G) ein rodentizides Mittel ist.

10. Zusammensetzung nach einem der vorhergehenden Ansprüche, umfassend außerdem Substanzen, die auf Ultraviolett reaktiv sind, wie beispielsweise Farbmittel oder Pigmente, in Mengen, die im Allgemeinen zwischen 0,1-0,01 Gew.-% mit Bezug auf die gesamte Zusammensetzung liegen.

11. Verfahren für die Herstellung einer Zusammensetzung nach einem der vorhergehenden Ansprüche 1-10 in der Form einer Paste, von Kügelchen oder eines Paraffinblocks, umfassend:
- Trockenmischen, unter Rühren in einem hochleistungsfähigen Schnellmischer, eines oder mehrerer fester pulverförmiger Bestandteile der Komponenten A), B), D), E) und F), falls sie vorliegt,
- Mischen der vorher erhaltenen pulverförmigen Mischung mit einem oder mehreren Bestandteilen der Komponente C) in dem hochleistungsfähigen Schnellmischer,
- wahlweise Zusetzen des Wirkstoffs, der Komponente G),
- wahlweise Zusetzen der Komponente H) wenn die Komponenten G) ein rodentizides Mittel ist, und
- Mischen der oben erwähnten Komponenten in dem hochleistungsfähigen Schnellmischer, derart, dass eine homogene Mischung erhalten wird, die die Konsistenz einer Paste oder eines Paraffinblocks oder eine Fließfähigkeit derart aufweist, dass sie die Extrusion davon im Falle der Kügelchen gestattet.

12. Verwendung der Zusammensetzung nach einem der vorhergehenden Ansprüche 1-10 als Überwachungsköder in Verbindung mit einer herkömmlichen Falle oder mit giftigen rodentiziden Ködern eines Entrattungssystems.

## Revendications

1. Composition rodenticide, sous la forme d'une pâte fraîche, d'un granule ou d'un bloc de paraffine, de toxicité négligeable et d'extrême sapidité, qui comprend, les uns mélangés aux autres,
A) au moins un agent solidifiant inorganique et modificateur du pH, capable de se solidifier en présence d'eau, sélectionné parmi les liants hydrauliques tels que le ciment Portland, le ciment à prise rapide, le sulfate de calcium anhydre (anhydrite), le sulfate de calcium dihydraté [CaSO₄·2H₂O], le sulfate de calcium hémihydraté [(CaSO₄)₂·H₂O] ; ou des mélanges de ceux-ci,
B) au moins un agent hygroscopique et/ou hydrophile inorganique ou organique de goût agréable qui gonfle et augmente de volume en présence d'eau, change de consistance, ledit agent ne comprenant pas de farines mais comprend des dextrines, ou des mélanges de celles-ci avec de l'amidon et du son de céréale ;
C) au moins un liant hydrophobe, de goût agréable pour les espèces de rongeurs, sélectionné parmi
- les huiles, les beurres, les cires et les graisses végétales et/ou animales, sous forme liquide ou solide à température ambiante ; ou des mélanges de ceux-ci avec des quantités plus faibles de graisses de paraffine,
- les graisses de paraffine, dans le cas de blocs de paraffine, à condition que leur teneur soit inférieure ou égale à 20 % en poids par rapport au poids de la composition totale ;
D) au moins une charge inerte sélectionnée parmi le charbon, l'argile et les silicates, en général, la vermiculite, ou des mélanges de ceux-ci ;
E) au moins une substance de goût agréable pour augmenter la sapidité de l'appât ; ledit composant C) étant sous forme de mélange avec le reste des composants de ladite composition
ladite ou lesdites substances de goût agréable B) étant un coadjuvant pour augmenter l'efficacité de solidification des agents solidifiants A) pour le blocage intestinal ;
à condition que lorsque A) est du ciment, B) ne contienne pas de bentonite.

2. Composition selon la revendication 1 comprenant en outre
- au moins un agent amer dissuasif F) pour éviter les ingestions accidentelles, en des quantités inférieures à 1 % en poids ; et/ou
- un composant G) sélectionné parmi un agent rodenticide, de préférence ayant une action anticoagulante ou une action vasoconstrictrice périphérique ; un sédatif ou un dérivé biologique capable d'avoir une action rodenticide, visant également uniquement le contrôle de la reproduction ; ou des mélanges de ceux-ci.

3. Composition selon la revendication 1 ou 2 dans laquelle le composant A) est sélectionné parmi le sulfate de calcium anhydre (anhydrite), le sulfate de calcium dihydraté [CaSO₄·2H₂O], le sulfate de calcium hémihydraté [(CaSO₄)₂·H₂O]; ou des mélanges de ceux-ci.

4. Composition selon la revendication 1 ou 2 dans laquelle le composant B) est sous la forme d'un mélange avec un ou plusieurs éléments sélectionnés parmi les substances déshydratantes et/ou desséchantes telles que le sulfate de sodium, également anhydre, le sulfate de magnésium, également anhydre ; les substances de porosité élevée telles que la bentonite, les éponges synthétiques et végétales, les polymères hydroabsorbants « hydrogel », également sous forme de granules, ou des mélanges de ceux-ci.

5. Composition selon l'une quelconque des revendications précédentes dans laquelle le composant C) est sélectionné parmi l'huile de cacahuète, l'huile de ricin, l'huile d'olive, l'huile de palme, l'huile de noix de coco, l'huile de sésame, l'huile de pépins de raisin, l'huile de soja, l'huile de colza, lesdites huiles étant brutes, raffinées, partiellement ou totalement hydrogénées ; les margarines végétales, le beurre d'arachide, le beurre de cacao, la lécithine de soja ; l'huile minérale (paraffinum liquidum), la gelée de pétrole (vaseline), les paraffines solides telles que la cire microcristalline, la cire de paraffine ayant un point de fusion compris entre 47 et 64 °C ; ou des combinaisons de celles-ci.

6. Composition selon l'une quelconque des revendications précédentes dans laquelle le composant E) est sélectionné parmi les farines comestibles de céréales telles que le blé, le maïs, le riz, l'orge, l'avoine, le maïs, les farines de tapioca, la farine de châtaigne, la farine de noix de coco ou des mélanges de celles-ci ; la fécule de pomme de terre, les dextrines et analogues, éventuellement sous forme de mélange avec de petites quantités de farines de bois, copeaux de bois, cellulose et analogues ; les graines entières et/ou hachées, un ou plusieurs sucres (glucides) tels que le saccharose, le glucose également le sirop, le glutamate de sodium, le benzoate de sodium, le lait en poudre, le cacao en poudre, les farines de poisson et l'huile de poisson, et analogues.

7. Composition selon l'une quelconque des revendications 2 à 6 dans laquelle le composant G) est sélectionné parmi un agent rodenticide appartenant à la famille des hydroxycoumarines (warfarine, brodifacoum, difénacoum), à la famille des indantiones (chlorophacinone, diphacinone) ou le norbormide.

8. Composition selon l'une quelconque des revendications 2 à 7 dans laquelle les composants A) à G) ci-dessus sont présents en les quantités suivantes (% en poids) :
A) 15 à 30 %, de préférence 25 à 30 % ;
B) 15 à 30 % ;
C) 10 à 30 % ;
D) 15 à 30%;
E) quantité nécessaire jusqu'à 100 %, en général comprise entre 0,1 et 8 %, de préférence entre 0,5 et 6 % ;
F) de 0,001 à 0,01%, de préférence de 0,001 % ;
G) de 0 à 0,5%.

9. Composition selon l'une quelconque des revendications précédentes comprenant en outre un ou plusieurs hydroxydes de métaux alcalins H), de préférence de l'hydroxyde de calcium, en tant que stabilisant de l'ingrédient actif G) lorsque le composant G) est un agent rodenticide.

10. Composition selon l'une quelconque des revendications précédentes comprenant en outre des substances réactives aux ultraviolets telles que des agents colorants ou des pigments, en des quantités généralement comprises entre 0,1 et 0,01 % en poids par rapport à la composition totale.

11. Procédé de préparation d'une composition selon l'une quelconque des revendications précédentes 1 à 10, sous la forme d'une pâte, de granules ou d'un bloc de paraffine, comprenant :
- mélanger à sec, tout en agitant dans un mixeur rapide à grande puissance, un ou plusieurs ingrédients pulvérulents solides des composants A), B), D), E et F), si présent,
- mélanger le mélange pulvérulent précédemment obtenu avec un ou plusieurs ingrédients du composant C) à l'intérieur du mixeur rapide à grande puissance,
- ajouter éventuellement l'ingrédient actif, composant G),
- ajouter éventuellement le composant H) lorsque le composant G) est un agent rodenticide, et
- mélanger les composants susmentionnés dans ledit mixeur rapide à grande puissance de sorte à obtenir un mélange homogène ayant la consistance d'une pâte ou d'un bloc de paraffine, ou une fluidité telle pour permettre leur extrusion dans le cas de granules.

12. Utilisation des compositions selon l'une quelconque des revendications précédentes 1 à 10 comme appâts de contrôle en association avec des pièges conventionnels ou avec des appâts rodenticides toxiques d'un système de dératisation.
